# EUROPEAN PATENT SPECIFICATION

(11) **EP 4 340 238 B1**
(45) Date of publication and mention of the grant of the patent: **13.11.2024**
(21) Application number: 22195701.2
(22) Date of filing: 14.09.2022
(51) Int. Cl.: H04W 40/22, H04B 5/72, H04B 5/77

(54) **AUTOMATIC HARDWARE INTERFACE DETECTION**
AUTOMATISCHE ERKENNUNG VON HARDWARE-SCHNITTSTELLEN
DÉTECTION AUTOMATIQUE D'INTERFACE MATÉRIELLE

(43) Date of publication of application: 20.03.2024
(73) Proprietor: Renesas Design Austria GmbH, 8041 Graz (AT)
(72) Inventor: Röck, Christian, 8041 Graz (AT)
(74) Representative: Schwarz & Partner Patentanwälte GmbH

(56) References cited:
- EP-A1- 3 570 449
- US-A1- 2009 206 984
- US-A1- 2011 226 853
- US-A1- 2018 268 132
- REV: "UM10819 PN7120 User Manual", PN7120 USER MANUAL FOR AN NFC CONTROLLER BY NXP, 3 April 2015 (2015-04-03), XP055264163, Retrieved from the Internet <URL:https://www.nxp.com/docs/en/user-guide/> [retrieved on 20160411]
- TM NCI: "NFC Controller Interface (NCI) Specification Technical Specification NFC Forum Contents", 6 November 2012 (2012-11-06), XP055388030, Retrieved from the Internet <URL:http://www.cardsys.dk/download/NFC_Docs/NFC Controller Interface (NCI) Technical Specification.pdf> [retrieved on 20170705]

## Description

### FIELD OF THE INVENTION

The present invention relates to device that processes a Near Field Communication type application, which device comprises:
a host processor that is built to process device applications, that use the Near Field Communication type application, and that comprises a host wired data interface stage with an encoder built to encode data based on a first interface protocol and to communicate the encoded data via N information lines;
a NFC controller, that is built to processes a Near Field Communication type contactless interface and that comprises a NFC controller wired data interface stage with a first decoder, built to communicate via the N information lines with the host wired data interface stage based on the first interface protocol, and with a second decoder, built to communicate via the N information lines with another host wired data interface stage of another host processor based on a second interface protocol;
a protocol selection stage of the NFC controller wired data interface stage, that is built to select the first decoder or the second decoder to decode the data received via the N information lines according to the selected first interface protocol or selected second interface protocol.

### BACKGROUND OF THE INVENTION

The applicant sold an integrated circuit PTX 100R that is used as NFC controller in devices like an RFID reader with Near Field Communication (NFC) functionality. NFC technology has been developed by an industry consortium under the name of NFC Forum (http://www.nfc-forum.ofg) and derives from RFID technology. NFC components may operate in a "Reader" mode, a "Card Emulation" mode and a "Device" mode as standardized in ISO 18.092. An NFC component emits via its Near Field Communication contactless interface magnetic fields, sends data by modulating the amplitude of the magnetic field, and receives data by load modulation and inductive coupling. In the emulation mode, described for instance in EP 1 327 222, the NFC component operates passively like a transponder to engage in a dialog with another reader and to be seen by the other reader as an RFID chip.

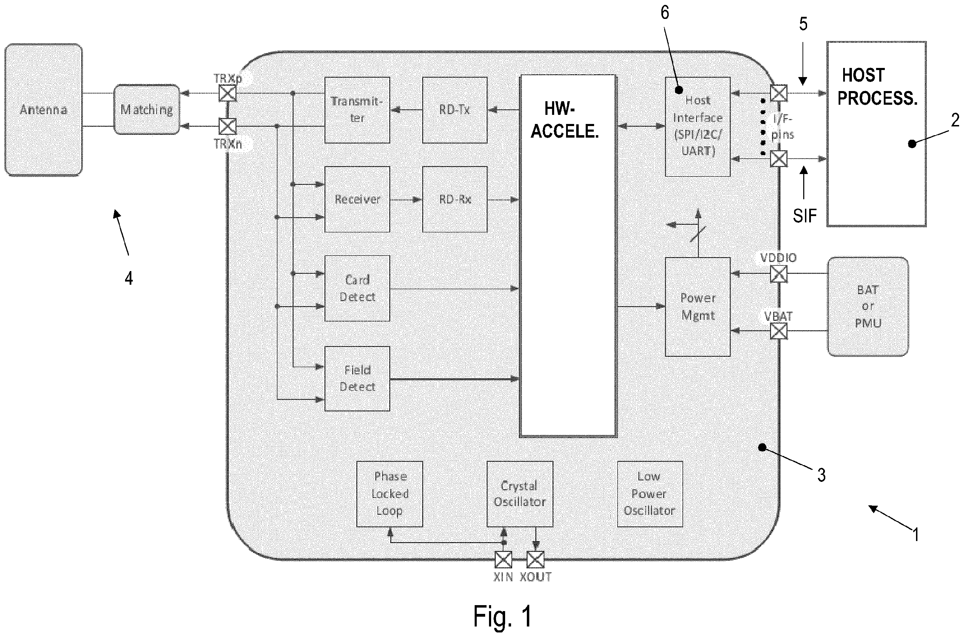

The known reader with the integrated circuit PTX 100R comprises an integrated circuit host processor or reader processor that processes all kind of applications like a payment application relevant for the normal reader functionality of the device. A block diagram of this reader 1 according to state of the art is shown in figure 1 with a host processor 2. To add the Near Field Communication feature and contactless interface to this reader 1, the integrated circuit PTX 100R has been added as NFC controller 3 into this reader 1, which enables NFC communication via a contactless interface 4. The NFC Forum Specification "NFC Controller Interface (NCI)" defines the software interface protocol to be used to enable communication between the host processor 2 and the NFC controller 3. The host processor 2 implements this NCI Interface with a stack of software named host driver that communicates based on the NCI interface with a stack of software named controller driver processed in the NFC controller 3.

A device disclosed in EP 3 160 165 B1 comprises such a host processor 2, that implements this NCI Interface in the host processor only. This concept is known as "split stack" NFC architecture of the host processor 2 and the NFC controller 3 and enables, that NFC controller 3 only needs a relative small stack of software to be processed with less computing power and memory area needed. This has the advantage that all none-time critical and/or memory consuming tasks of a Near Field Communication application of the reader are processed by the host processor 2, while the time critical tasks are processed by the NFC controller 3.

Independent on how the NCI interface is realized and how this processes are split between the host processor 2 and the NFC controller 3, these two integrated circuits have to be connected via a hardware contact interface to exchange data/information between the host processor 2 and the NFC controller 3. In one direction data from the host processor 2, that have to be transferred via the contactless interface 4 to a smart card or other NFC device, and in the other direction, data from such other NFC device received via the contactless interface 4, have to be transferred via the hardware interface to the host processor 2. There are several different hardware interfaces known and used by host processors like for instance the Serial Peripheral Interface SPI or the Inter-Integrated circuit data bus I2C or the Universal Asynchronous Receiver Transmitter UART, just to name three different interface protocols. Each of these hardware interfaces is defined by a public available specification that defines a connection scheme of the integrated circuits. In this connection scheme it is defined with how much information lines 5 the host processor 2 and the NFC controller 3 have to be physically connected and it is defined which information line 5 transmits which kind of information like e.g. a clock signal or a data signal and if data have to be encoded/decoded. In these specifications furthermore the interface protocol is defined that fixes when which signal has to be provided at the different information lines to e.g. start a communication.

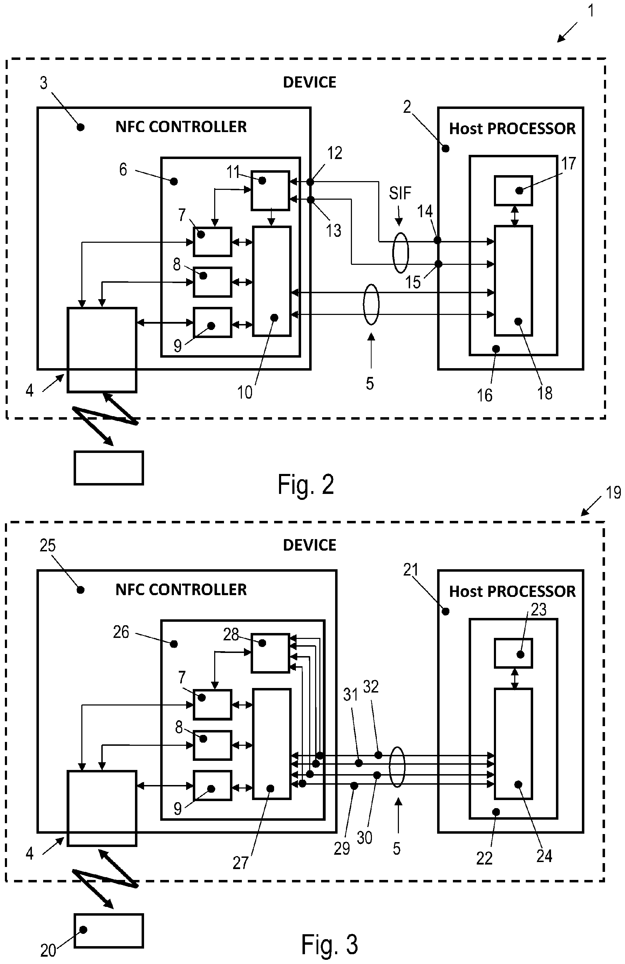

It is the aim of manufacturers of NFC controllers like the known NFC controller 3, that the NFC controller 3 should be able to communicate with as much as possible different host processors 2 from different manufacturers on the market. The NFC controller 3 therefore comprises an NFC controller wired data interface stage 6, that is able to communicate not only based on one, but based on several of these different hardware interfaces and interface protocols. Figure 2 shows the relevant blocks of the reader 1 according to figure 1. The NFC controller wired data interface stage 6 therefore comprises a decoder/encoder 7, 8 and 9 for each of these different interface protocols. That means that first decoder/encoder 7 is able to encode and decode data for the Serial Peripheral Interface SPI first interface protocol and that second decoder/encoder 8 is able to encode and decode data for the Inter-Integrated circuit data bus I2C second interface protocol and that third decoder/encoder 9 is able to encode and decode data for the Universal Asynchronous Receiver Transmitter UART third interface protocol. Furthermore, the NFC controller wired data interface stage 6 comprises an interface protocol stage 10 that is built to communicate according to all of these different interface protocols. To enable the selection of the selected decoder 7, 8 or 9 and the selected interface protocol used by the host processor 2, the NFC controller 3 comprises a protocol selection stage 11 and two additional pins 12 and 13 to connect two information lines It . These information lines SIF and the information lines 5 are connected to a host wired data interface stage 16 which comprises encoder/decoder 17 and host interface protocol stage 18. The technical specification of the NFC controller 3 defines on which pin 12 and 13 which voltage has to be provided to enable the protocol selection stage 11 to select which of these interface protocols is used by the host processor 2 and should be used by the NFC controller 3 as well. Just as an example SIF pin 12 needs to be set on logical "0" (e.g. ground potential) and SIF pin 13 needs to be set on logical "1" (e.g. 5V) to select the first interface protocol realized as the SPI first interface protocol with decoder/encoder 7 selected by protocol selection stage 11. Other logical combinations at pins 12 and 13 are used to select other interface protocols for the hardware interface communication between the host processor 2 and the NFC controller 3. The SIF pins 12 and 13 may be connected to two output pins 14 and 15 of the host processor 2 as shown in figure 2. In another embodiment a fixed wired solution may be used, where a fixed connection to ground potential or 5V power is realized for the SIF pins 12 and 13 as only during the implementation of the integrated circuits onto the printed circuit bord this select the one interface protocol and decoder/encoder used by the host processor 2 has to be done once.

Drawback of this solution is, that at least the NFC controller 3 and, depending on above described different possible implementations, quite often in addition also the host processor 2 needs to provide these two additional SIF pins just to select the hardware interface protocol to be used. This increases the chip area and costs of the integrated circuits and the complexity of the printed circuit board of the reader.

The patent EP3570449 A1 discloses relevant background art wherein a host processor is connected only via two electrical connections with a communication block of an NFC controller to enable either an I2C bus, an UART bus or a SPI bus between the host processor and the NFC controller to transmit and receive information over a contactless interface of an antenna.

### SUMMARY OF THE INVENTION

It is an object of the invention to provide a device and chipset and a method that processes Near Field Communication type applications with an improved use of the limited chip area of the NFC controller and less work to implement the chipset into the device.

This object is achieved with a device according to claim 1 and a chipset according to claim 9 and method according to claim 10. The NFC controller of the claimed device comprises a protocol selection stage that is built to analyze signals on at least one of the two, three or more information lines of the hardware interface between the host processor and the NFC controller. The protocol selection stage takes as a prerequisite that a fixed information line connection scheme of the technical specification of the NFC controller has been implemented by the manufacturer of the device to connect the host processor with the NFC controller for the interface protocol used by the host processor. During a boot procedure after power-on of the NFC controller, the protocol selection stage analyses the signals on these information lines to select either the first decoder stage or the second decoder stage to be used to decode the data received via the N information lines according to the selected first interface protocol or the selected second interface protocol. This is possible as the fixed connection scheme in the specification of the NFC controller has been used, which hardware information line (pin of the integrated circuit) between the host processor and the NFC controller has to be used for which line of the interface protocol used by the host processor. The protocol selection stage is built to detect all changes of potentials or signals that are received at the N information lines of the hardware interface from the host processor and as all these different interface protocols during power up and during the initialization of a communication deliver defined potentials or signals or commands on defined information lines, a comparison with the signals expected for the different interface protocols enables to decide which interface protocol is used by the host processor to select the appropriate decoder/encoder stage. This selection by the protocol selection stage also includes the selection of this interface protocol at the interface protocol stage of the NFC controller wired data interface stage which from this selection onwards communicates with the host wired data interface stage based on the selected interface protocol. As the NFC controller of the claimed device is able to automatically detect the interface protocol used by the host processer no SIF information lines and pins at the NFC controller and the host processor are needed to select the interface protocol, what reduces the chip area of the NFC controller and the work to implement the chipset into the device.

These and other aspects of the invention will be apparent from and elucidated with reference to the embodiments described hereinafter. The person skilled in the art will understand that various embodiments may be combined.

### BRIEF DESCRIPTION OF THE DRAWINGS

Figures 1 shows a block diagram of a reader device with a NFC controller according to the state of the art.
Figure 2 shows relevant details of the reader shown in figure 1.
Figure 3 shows a device according to an embodiment of the invention.
Figure 4 shows signals of the I2C specification with a start condition and a stop condition.

### DETAILED DESCRIPTION OF EMBODIMENTS

Figure 3 shows a device 19 that realizes the functionality of a payment terminal or reader to enable NFC devices 20, like mobile phones or smart cards, to pay via the NFC wireless interface 4. In figure 3 the same reference numbers are used as in figure 2 for those blocks or stages that have the same functionality as described for the device 1 according to the state of the art.

Device 19 comprises a host processor 21, that is built to process the payment application and that comprises a host wired data interface stage 22 with an encoder/decoder 23 built to encode data based on a first interface protocol. In this first embodiment of the invention, the first interface protocol is the Serial Peripheral Interface SPI protocol known to a person skilled in the art. The host wired data interface stage 22 furthermore comprises a host interface protocol stage 24 to communicate the data encoded based on the SPI encoded data via N = 4 information lines 5.

To connect the host processor 21 with a NFC controller 25 of the device 19, these two integrated circuits have to be connected via a hardware contact interface to exchange data/information via the information lines 5. In one direction data from the host processor 21, that have to be transferred via the contactless interface 4 to the NFC device 20, and in the other direction, data from the NFC device 20 received via the contactless interface 4, have to be transferred via the hardware interface to the host processor 21. There are several different hardware interfaces known and used by host processors like for instance the Serial Peripheral Interface SPI or the Inter-Integrated circuit data bus I2C or the Universal Asynchronous Receiver Transmitter UART, just to name three different interface protocols. Each of these hardware interfaces is defined by a public available specification that defines a connection scheme of the integrated circuits. In this connection scheme it is defined with how much information lines 5 the host processor 21 and the NFC controller 25 have to be physically connected and it is defined which information line 5 transmits which kind of information like e.g. a clock signal or a data signal and, whether or not data have to be encoded/decoded. In these specifications furthermore the interface protocol is defined that fixes when which signal has to be provided at the different information lines to e.g. start a communication.

It is the aim of manufacturers of NFC controllers like the NFC controller 25, that the NFC controller 25 should be able to communicate with as much as possible different host processors 21 from different manufacturers on the market. The NFC controller 25 therefore comprises an NFC controller wired data interface stage 26, that is able to communicate not only based on one, but based on several of these different hardware interfaces and interface protocols. The NFC controller wired data interface stage 26 therefore comprises decoder/encoder 7, 8 and 9 for each of these different interface protocols. That means that first decoder/encoder 7 is able to encode and decode data for the Serial Peripheral Interface SPI first interface protocol and that second decoder/encoder 8 is able to encode and decode data for the Inter-Integrated circuit data bus I2C second interface protocol and that third decoder/encoder 9 is able to encode and decode data for the Universal Asynchronous Receiver Transmitter UART third interface protocol. Furthermore, the NFC controller wired data interface stage 26 comprises an NFC interface protocol stage 27, that is built to communicate according to all of these different interface protocols. To enable the selection of the selected decoder 7, 8 or 9 and the selected interface protocol used by the host processor 21, the NFC controller 25 comprises a protocol selection stage 28 that is built to analyze signals on at least one of the four information lines 5 based on a fixed information line connection scheme for each of the first interface protocol and second interface protocol and third interface protocol during a boot procedure after power-on of the NFC controller 25 to select either the first decoder stage 7 or the second decoder stage 8 or the third decoder stage 9 to be used to decode the data received via the four information lines 5 according to the selected first interface protocol or the second interface protocol or third interface protocol.

The connection scheme of the NFC controller 25 in its data sheet or technical specification defines that a pin of the host processor 21 that provides the clock signal for the hardware interface has to be connected via a first information line 29 with that pin of the NFC controller 25, that should receive the clock signal for the hardware interface, independent of which of the three possible interface protocolls is used by the host processor 21. This is possible as all these interface protocolls use a clock signal. The other three of the information lines 5 have to be connected to the other input/output pins of the host interface protocol stage 24 and the NFC interface protocol stage 27. The specification of the Serial Peripheral Interface SPI used by the host processor 21 defines that following three information lines are provided at three pins of the host controller 21:
1. POCI (peripheral out/controller in) or MISO (maser in/slave out)
2. PICO (peripheral in/controller out) or MOSI (master out/slave in)
3. SS (slave select)
and the connection scheme of the NFC controller 25 defines that, if the host processor 21 uses a Serial Peripherial Interface SPI, then POCI or MISO pin of the host processor 21 has to be connected via a second information line 30 to the pin of the NFC controller 25 defined in the specification of the NFC controller 25. Furthermore the PICO or MOSI pin of the host processor 21 has to be connected via a third information line 31 to that pin of the NFC controller 25 defined in the specification of the NFC controller 25 and the SS pin of the host processor 21 has to be connected via a fourth information line 32 to that pin defined in the specification of the NFC controller 25. The protocol selection stage 28 stores for all three possible and supported interface protocols information how these interface protocols start their communication after a power-on of the host processor 21 (master) and the NFC controller 25 (slave) and what kind of signals have to be expected. After a power-on, the NFC interface protocol stage 27 is built to switch all pins of the hardware interface, this means all pins connected to information lines 5, as input pins to detect all kind of signals or changes of potentials or commands or address information received. Based on these signals detected at the pins of the NFC interface protocol stage 27 connected to information lines 5, the protocol selection stage 28 is able to detect what kind of interface protocol is used by the host processor 21 and to select the appropriate decoder 7, 8 or 9 and to select the appropriate interface protocol for the further communication of the NFC interface protocol stage 27 with the host interface protocol stage 24.

In above explained embodiment, where the host processor uses the Serial Peripheral Interface SPI, the protocol selection stage 28 is built to detect the change from logic "1" (typical 5V) to logic "0" (typical ground potential) on the second information line 30 used to transmit a chip-select signal SS and after that to detect the start of the clock signal on the first information line 29. Based upon these detections, the protocol selection stage 28 is built to decide that a Serial Peripheral Interface SPI is used by the host wired data interface stage 22 and to select an SPI decoder as the first decoder stage 7 to decode the data received via the information lines 5. This first interface protocol is further on used by the NFC controller 25 until the next power-down and later power-on happens. This provides the advantage that by analyzing only the signals at the pins and not the data on data decoder level, the interface protocol used by the host processor 21 may be detected fast and save.

The NFC controller wired data interface 26 furthermore is built to observe a frame detect or error detect output of the selected decoder 7 to decide whether the detection and selection process has to be restarted. In case the detected errors in data or frames received from the host processor 21 increase based on the detections of the decoder 7, the protocol selection stage 28 is built to analyze signals at the pins of the NFC controller 25 connected to the information lines 5 received not only after power-on, but also during normal communication, to reconfirm the selection or to change the selection of the interface protocol and decoder. This enables that a wrong initial selection due to miss detected signals after power-on may be corrected. This re-check of the selected interface protocol is processed for data on data decoder level.

Now, in more detail, the method is explaind how this automatic selection of the interface protocol is processed. This method comprises the following steps:
In a first step a power-on procedure in the host processor 21 and in the NFC controller 25, after power for these integrated circuits has been turned on, are processed. These power-on procedures are known to a person skilled in the art and may include to fill some memory areas with start values and switch some pins to input or output pins.

In a second step the NFC controller 25 waits a wait period of a few milliseconds or seconds or a similar time period to ensure, that the host processor 21 finalized its power-on procedure. After that the NFC controller 25 analyzes signals received on at least one of four information lines 5 of a hardware wired data interface between the host processor 21 and the NFC controller 25 based on a fixed information line connection scheme for each of a first interface protocol and a second interface protocol and a third interface protocol of the hardware wired data interface that may be used by the host processor 21. Based on this analyze either the first decoder stage 7 and first interface protocol or the second decoder stage 8 and second interface protocol or the third decoder stage 9 an third interface protocol of the NFC controller 25 is selected to be used to decode the data received via the four information lines 5 according to the selected first interface protocol or the selected second interface protocol or third interface protocol. With this method an automatic detection of the interface protocol used by the host processor 21 is realized.

In a second embodiment of the invention, another host processor uses the Inter-Integrated circuit data bus I2C second interface protocol and encodes the data to be transmitted to the NFC controller 25 according to this second interface protocol. The specification of such an I2C bus defines, that the master (host processor 21) starts the communication with a byte via an address/data signal ADS (data line = fourth information line 32) wherein the first seven bits are the address bits to address the slave (NFC controller 25) and the eights bit states, if the slave will receive or send data from or to the master. It is furthermore possible to use two additional address pins of the slave to change two bits of the fix in the integrated circuit of the slave implemented I2C address to enable that up to four identical integrated circuits with changed address bits are used and addressed on the same I2C bus. The protocol selection stage 28 is built to observe during a detection period of a few milliseconds or seconds or similar time period, if the clock signal CLK is detected on the first information line 29 while on the second information line 30 and third information line 31 (address change lines), connected to the two additional address pins of the NFC controller 25, and used to change two of the seven address bits sent by the host processor 21 at the fourth information line 32 (address/data signal ADS) to start the communication, no change of signal is detected. This is possible, because the fixed information line connection scheme of the NFC controller 25 defines, that the second information line 30 and third information line 31 have to be set to a fixed potential (ground or VDD) in case the host processor 21 uses the second interface protocol with an I2C bus. Therefore no change of the signal or potential will be detected at the address lines/second and third information lines 30 and 31 while the host processor 21 starts the communication. As a result, if the protocol selection stage 28 detects the clock signal CLK and no changes on the second information line 30 and third information line 31, then it decides, that an Inter-Integrated circuit I2C data bus is used as second interface protocol by the host wired data interface stage of this other host processor and selects an I2C decoder as second decoder stage 8 to decode the data received on the forth information line 32 after the communication between the host processor 21 and NFC controller 25 has been initialized. In another embodiment the two additional address pins of the NFC controller could be connected hard wired to ground potential or VDD to provide them the fixed potential and address within the I2C bus. The advantage of this embodiment is that the host processor does not need these further two pins to be connected to the second information line 30 and third information line 31. The detection period is typically several clock cycles of the clock signal long to ensure that the condition checked or detected is for sure realized.

In a third embodiment of the invention a further host processor is connected to the NFC controller 25, which uses the Universal Asynchronous Receiver Transmitter UART third interface protocol and encodes the data to be transmitted to the NFC controller 25 according to this third interface protocol. The protocol selection stage 28 is built to decide that a Universal Asynchronous Receiver Transmitter UART is used as third interface protocol by the host wired data interface stage of this further host processor, if none of the first interface protocol or the second interface protocol has been selected during a selection period, in which selection period above explained selection of the first or second interface protocol is processed, and built to select an UART decoder as third decoder stage 9 to decode the data received via the information lines 5.

This principle of an automatic detection which interface protocol and/or which encoding has been used by one integrated circuit for a hardware interface with a second integrated circuit and to automatically select the appropriate interface protocol and/or decoder at the second integrated circuit has been explained based on a device that processes a NFC type application. This principle may be used for any other RFID type application and even further for any other kind of integrated circuits without any wireless interface involved.

The number of information lines that connect pins of the host processor and the NFC controller depends on the different interface protocols used by these two integrated circuits. If only two wire hardware interface protocols are used then N = 2, but if only one of the interface protocols that may be selected within the NFC controller uses N = 3 or N = 4 or even more information lines may be used. For practical reasons it depends on how much information lines the interface protocol used by the host processor needs how much information lines are used to connect the two integrated circuits.

A person skilled in the art will understand that depending on the different interface protocols possible to be selected within the protocol selection stage 28 of the NFC controller 25 all kind of different signal changes may be identified to distinguish in a fast and save way the interface protocols supported.

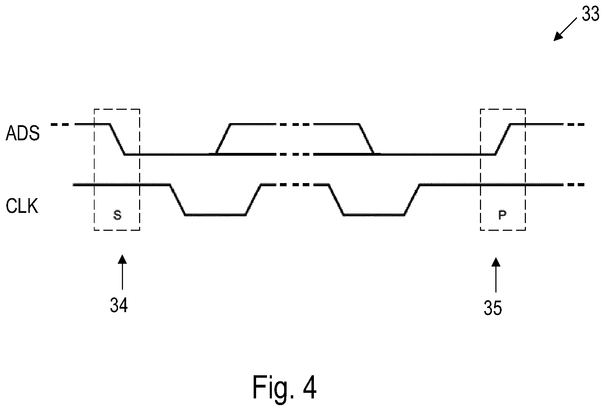

In a further embodiment of the invention the Inter-Integrated circuit I2C would be identified by the following analyze of the signals on the information lines 5 by the protocol selection stage 28 without the need of the two additional address pins as explained in the second embodiment. The I2C specification defines in signals 33 a start condition 34 and stop condition 35 of clock signal CLK, received by the NFC controller 25 on the first information line 29, and the address/data signal ADS, received by the NFC controller 25, received by the NFC controller 25, received by the NFC controller 25 on the forth information line 32, as shown in figures 3 and 4. In the start condition 34, the clock signal CLK and the address/data signal ADS both have a high potential and the address/data signal ADS changes to low potential while the clock signal CLK stays at high potential and after that the clock signal CLK changes to low potential as well. If this start condition 34 is detected by the protocol selection stage 28 after a power-on, the protocol selection stage 28 decides that an Inter-Integrated circuit I2C data bus is used as second interface protocol by the host wired data interface stage 22 and selects the I2C decoder as second decoder 8 to decode the data received on the fourth information line 32.

In a further embodiment of the invention the Serial Peripheral Interface SPI would be identified by the following analyze of the signals on the information lines 5 by the protocol selection stage 28. The SS pin of the host processor 21, connected to the NFC controller 25 with the forth information line 32, is high and changes to low, what means that the NFC controller 25 is selected by the host processor 21. If after that the clock signal CLK received from the host processor 21 on the first information line 29 changed polarity at least 16 times, what means that at least 8 bits have been received, and if after that the NFC controller 25 stays selected by a still low potential on the forth information line 32, then the protocol selection stage 28 is built to decide that a Serial Peripheral Interface SPI is used by the host wired data interface stage 22 and selects an SPI decoder as the first decoder stage 7 to decode the data received via the information lines 5.

In a further embodiment of the invention the Universal Asynchronous Receiver Transmitter UART is not only selected, if both other interface protocols were not selected, but active identified by the following analyze of the signals on the information lines 5 by the protocol selection stage 28. The specification of UART defines only two information lines, one in each direction. The fixed information line connection scheme how to implement a connection between the NFC controller 25 and a host processor defines that the RDX pin of the host processor 21 has to be connected with the TDX pin of the NFC controller 25 via the first information line 29 and the TDX pin of the host processor 21 has to be connected with the RDX pin of the NFC controller 25 via the second information line 30. If the protocol selection stage 28 detects first a high potential, then a low potential and then again a high potential on the second information line 30, while the potential on the first information line 30 does not change, then the protocol selection stage 28 is built to decide that a Universal Asynchronous Receiver Transmitter UART is used as third interface protocol by the host wired data interface stage 22 of the host processor 21.

It is furthermore advantageous to use not only one, but more of above results of the analysis of the protocol selection stage 28 to decide or reconfirm which interface protocol has to be selected after power-on or during normal processing.

## Claims

1. Device (19) that processes a Near Field Communication type application, which device (19) comprises:
a host processor (21) that is built to process device applications, that use the Near Field Communication type application, and that comprises a host wired data interface stage (22) with an encoder (23) built to encode data based on a first interface protocol and to communicate the encoded data via N information lines (5);
a NFC controller (25), that is built to process a Near Field Communication type contactless interface (4) and that comprises a NFC controller wired data interface stage (26) with a first decoder (7), built to communicate via the N information lines (5) with the host wired data interface stage (22) based on the first interface protocol, and with a second decoder (8), built to communicate via the N information lines (5) with another host wired data interface stage of another host processor based on a second interface protocol;
a protocol selection stage (28) of the NFC controller wired data interface stage (26), that is built to select the first decoder (7) or the second decoder (8) to decode the data received via the N information lines (5) according to the selected first interface protocol or the selected second interface protocol,
**characterized in that**
the protocol selection stage (28), is built to analyze signals on at least one of the N information lines (5) based on a fixed information line connection scheme for each of the first interface protocol and the second interface protocol during a boot procedure after power-on of the NFC controller (25) to select either the first decoder (7) or the second decoder (8) to be used to decode the data received via the N information lines (5) according to the selected first interface protocol or the second interface protocol.

2. Device (19) according to claim 1, wherein the protocol selection stage (28) is built to analyze a number of N = 3 or N = 4 information lines (5) with a first information line (29) used to transmit a clock signal and a second information line (30) and a third information line (31) and/or a fourth information line (32) to transmit and/or receive data and/or address information and/or other signals according to signals expected to be received, if the first interface protocol or the second interface protocol is used by the host wired data interface stage (22).

3. Device (19) according to claim 2, wherein the protocol selection stage (28) is built to detect the change from logic "1" to ground potential as a logic "0" on the second information line (30) used to transmit a chip-select signal and only after that to detect the start of the clock signal on the first information line (29) and wherein the protocol selection stage (28), in case of both such detections, is built to decide that a Serial Peripheral Interface (SPI) is used by the host wired data interface stage (22) and to select an SPI decoder as the first decoder (8) to decode the data received via the information lines (5).

4. Device (19) according to claim 2 or 3, wherein the protocol selection stage (28) is built to observe during a detection period, if the clock signal is detected on the first information line (29) while on the second information line (30) and third information line (31) connected to additional address pins of the NFC controller (25) and used as address change lines no changes of the signals are detected to decide that an Inter-Integrated circuit (I2C) data bus is used as the second interface protocol by the host wired data interface stage (22) and to select an I2C decoder as the second decoder (8) to decode the data received on the fourth information line (32).

5. Device (19) according to claim 4, wherein the protocol selection stage (28) is built to decide that a Universal Asynchronous Receiver Transmitter (UART) is used as a third interface protocol by the host wired data interface stage (22), if none of the first interface protocol or the second interface protocol has been selected during a selection period and to select an UART decoder as a third decoder (9) to decode the data received via the information lines (5).

6. Device (19) according to any of the claims 2 to 5, wherein the NFC controller wired data interface (26) comprises an encoder to encode data to be transmitted to the host processor (21) based on the selected interface protocol.

7. Device (19) according to any of the claims, wherein the NFC controller wired data interface (26) observes a frame detect or error detect output of the selected decoder (7, 8, 9) to decide whether the detection and selection process has to be restarted.

8. Device (19) according to any of the claims, wherein the protocol selection stage (28) after power-on configures all information line pins of the NFC controller (25) integrated circuit as input pins to detect a potential error in the implementation of the information line connection scheme.

9. Chipset for a device (19) that processes a Near Field Communication type application, **characterized in, that** the chipset comprises a host processor (21) and a NFC controller (25) of the device (19) as claimed in claims 1 to 8.

10. Method to process a Near Field Communication type application with a device (19) according to one of the claims 1 to 8 that comprises a host processor (21) that processes device applications, that use the Near Field Communication type application, and a NFC controller (25), that processes a Near Field Communication type contactless interface (4), wherein the following steps are processed in the NFC controller (25):
• process a power-on procedure in the host processor (21) and in the NFC controller (25) after power for these integrated circuits has been turned on;
• wherein the NFC controller (25), after a wait period to ensure that the host processor (21) finalized its power-on procedure, analyzes signals received on at least one of N information lines (5) of a hardware wired data interface between the host processor (21) and the NFC controller (25) based on a fixed information line (5) connection scheme for each of a first interface protocol and a second interface protocol of the hardware wired data interface that is used by the host processor (21) to select either a first decoder (7) and first interface protocol or a second decoder (8) and second interface protocol of the NFC controller (25) to be used to decode the data received via the N information lines (5) according to the selected first interface protocol or the selected second interface protocol.

## Patentansprüche

1. Vorrichtung (19), die eine Anwendung vom Typ Nahfeldkommunikation verarbeitet, wobei die Vorrichtung (19) umfasst:
einen Host-Prozessor (21), der so ausgebildet ist, dass er Vorrichtungsanwendungen verarbeitet, die die Anwendung vom Typ Nahfeldkommunikation verwenden, und der eine verdrahtete Host-Datenschnittstellenstufe (22) mit einem Encoder (23) umfasst, der so ausgebildet ist, dass er Daten auf der Grundlage eines ersten Schnittstellenprotokolls codiert und die codierten Daten über N Informationsleitungen (5) übermittelt;
einen NFC-Controller (25), der so ausgebildet ist, dass er eine kontaktlose Schnittstelle (4) des Typs Nahfeldkommunikation verarbeitet, und der eine verdrahtete Datenschnittstellenstufe (26) des NFC-Controllers mit einem ersten Decoder (7), der so ausgebildet ist, dass er über die N Informationsleitungen (5) mit der verdrahteten Host-Datenschnittstellenstufe (22) auf der Grundlage des ersten Schnittstellenprotokolls kommuniziert, und mit einem zweiten Decoder (8) umfasst, der so ausgebildet ist, dass er über die N Informationsleitungen (5) mit einer anderen verdrahteten Host-Datenschnittstellenstufe eines anderen Host-Prozessors auf der Grundlage eines zweiten Schnittstellenprotokolls kommuniziert;
eine Protokollauswahlstufe (28) der verdrahteten Datenschnittstellenstufe (26) des NFC-Controllers, die so ausgebildet ist, dass sie den ersten Decoder (7) oder den zweiten Decoder (8) auswählt, um die über die N Informationsleitungen (5) empfangenen Daten gemäß dem ausgewählten ersten Schnittstellenprotokoll oder dem ausgewählten zweiten Schnittstellenprotokoll zu decodieren,
**dadurch gekennzeichnet, dass**
die Protokollauswahlstufe (28) ausgebildet ist, um Signale auf mindestens einer der N Informationsleitungen (5) auf der Grundlage eines festen
Informationsleitungsverbindungsschemas für jedes des ersten Schnittstellenprotokolls und des zweiten Schnittstellenprotokolls während einer Boot-Prozedur nach dem Einschalten des NFC-Controllers (25) zu analysieren, um entweder den ersten Decoder (7) oder den zweiten Decoder (8) auszuwählen, der verwendet werden soll, um die über die N Informationsleitungen (5) empfangenen Daten gemäß dem ausgewählten ersten Schnittstellenprotokoll oder dem zweiten Schnittstellenprotokoll zu decodieren.

2. Vorrichtung (19) nach Anspruch 1, wobei die Protokollauswahlstufe (28) ausgebildet ist, um eine Anzahl von N = 3 oder N = 4 Informationsleitungen (5) zu analysieren, wobei eine erste Informationsleitung (29) verwendet wird, um ein Taktsignal zu übertragen, und eine zweite Informationsleitung (30) und eine dritte Informationsleitung (31) und/oder eine vierte Informationsleitung (32) verwendet werden, um Daten und/oder Adressinformationen und/oder andere Signale entsprechend den zu erwartenden Signalen zu übertragen und/oder zu empfangen, wenn das erste Schnittstellenprotokoll oder das zweite Schnittstellenprotokoll von der verdrahteten Host-Datenschnittstellenstufe (22) verwendet wird.

3. Vorrichtung (19) nach Anspruch 2, wobei die Protokollauswahlstufe (28) so ausgebildet ist, dass sie den Wechsel von einer logischen "1" auf Massepotential als eine logische "0" auf der zweiten Informationsleitung (30), die zur Übertragung eines Chip-Auswahlsignals verwendet wird, erkennt und erst danach den Beginn des Taktsignals auf der ersten Informationsleitung (29) erkennt, und wobei die Protokollauswahlstufe (28), im Falle beider solcher Erfassungen ausgebildet ist, um zu entscheiden, dass eine serielle periphere Schnittstelle (SPI) von der verdrahteten Host-Datenschnittstellenstufe (22) verwendet wird, und um einen SPI-Decoder als den ersten Decoder (8) auszuwählen, um die über die Informationsleitungen (5) empfangenen Daten zu decodieren.

4. Vorrichtung (19) nach Anspruch 2 oder 3, wobei die Protokollauswahlstufe (28) ausgebildet ist, um während einer Erfassungsperiode zu beobachten, ob das Taktsignal auf der ersten Informationsleitung (29) detektiert wird, während auf der zweiten Informationsleitung (30) und der dritten Informationsleitung (31), die mit zusätzlichen Adresspins des NFC-Controllers (25) verbunden sind und als Adressänderungsleitungen verwendet werden, keine Änderungen der Signale detektiert werden, um zu entscheiden, dass ein Inter-Integrated-Circuit-(I2C)-Datenbus als das zweite Schnittstellenprotokoll durch die verdrahtete Host-Datenschnittstellenstufe (22) verwendet wird, und um einen I2C-Decoder als den zweiten Decoder (8) auszuwählen, um die auf der vierten Informationsleitung (32) empfangenen Daten zu decodieren.

5. Vorrichtung (19) nach Anspruch 4, wobei die Protokollauswahlstufe (28) so ausgebildet ist, dass sie entscheidet, dass ein Universal Asynchronous Receiver Transmitter (UART) als ein drittes Schnittstellenprotokoll von der verdrahteten Host-Datenschnittstellenstufe (22) verwendet wird, wenn während einer Auswahlperiode weder das erste Schnittstellenprotokoll noch das zweite Schnittstellenprotokoll ausgewählt wurde, und dass sie einen UART-Decoder als einen dritten Decoder (9) auswählt, um die über die Informationsleitungen (5) empfangenen Daten zu decodieren.

6. Vorrichtung (19) nach einem der Ansprüche 2 bis 5, wobei die verdrahtete Datenschnittstelle (26) des NFC-Controllers einen Encoder zur Kodierung der an den Host-Prozessor (21) zu übertragenden Daten auf der Grundlage des ausgewählten Schnittstellenprotokolls umfasst.

7. Vorrichtung (19) nach einem der Ansprüche, wobei die verdrahtete Datenschnittstelle (26) des NFC-Controllers einen Frame-Detect- oder Error-Detect-Ausgang des ausgewählten Decoders (7, 8, 9) beobachtet, um zu entscheiden, ob der Erkennungs- und Auswahlprozess neu gestartet werden muss.

8. Vorrichtung (19) nach einem der Ansprüche, wobei die Protokollauswahlstufe (28) nach dem Einschalten alle Informationsleitungspins der integrierten Schaltung des NFC-Controllers (25) als Eingangspins konfiguriert, um einen möglichen Fehler bei der Implementierung des Informationsleitungsverbindungsschemas zu erkennen.

9. Chipsatz für eine Vorrichtung (19), das eine Anwendung vom Typ Near Field Communication verarbeitet, **dadurch gekennzeichnet, dass** der Chipsatz einen Host-Prozessor (21) und einen NFC-Controller (25) der Vorrichtung (19) nach einem der Ansprüche 1 bis 8 umfasst.

10. Verfahren zur Verarbeitung einer Anwendung vom Typ Nahfeldkommunikation mit einer Vorrichtung (19) nach einem der Ansprüche 1 bis 8, das einen Host-Prozessor (21), der Vorrichtungsanwendungen verarbeitet, die die Anwendung vom Typ Nahfeldkommunikation verwenden, und einen NFC-Controller (25) umfasst, der eine kontaktlose Schnittstelle (4) vom Typ Nahfeldkommunikation verarbeitet, wobei die folgenden Schritte im NFC-Controller (25) verarbeitet werden:
• Durchführen einer Einschaltprozedur im Host-Prozessor (21) und im NFC-Controller (25), nachdem die Stromversorgung für diese integrierten Schaltungen eingeschaltet wurde;
• wobei der NFC-Controller (25) nach einer Wartezeit, um sicherzustellen, dass der Host-Prozessor (21) seine Einschaltprozedur abgeschlossen hat Signale analysiert, die auf mindestens einer von N Informationsleitungen (5) einer verdrahteten Hardware-Datenschnittstelle zwischen dem Host-Prozessor (21) und dem NFC-Controller (25) empfangen werden, und zwar auf der Grundlage eines festen Verbindungsschemas der Informationsleitung (5) für jedes von einem ersten Schnittstellenprotokoll und einem zweiten Schnittstellenprotokoll der verdrahteten Hardware-Datenschnittstelle, die von dem Host-Prozessor (21) verwendet werden, um entweder einen ersten Decoder (7) und ein erstes Schnittstellenprotokoll oder einen zweiten Decoder (8) und ein zweites Schnittstellenprotokoll des NFC-Controllers (25) auszuwählen, die verwendet werden sollen, um die über die N Informationsleitungen (5) empfangenen Daten gemäß dem ausgewählten ersten Schnittstellenprotokoll oder dem ausgewählten zweiten Schnittstellenprotokoll zu decodieren.

## Revendications

1. Dispositif (19) qui traite une application de type à communication en champ proche, lequel dispositif (19) comprend :
un processeur hôte (21) qui est construit pour traiter des applications de dispositif, qui utilise l'application de type à communication en champ proche, et qui comprend un étage d'interface de données filaire hôte (22) avec un codeur (23) construit pour coder des données sur la base d'un premier protocole d'interface et pour communiquer les données codées via N lignes d'informations (5) ;
un contrôleur NFC (25), qui est construit pour traiter une interface sans contact de type à communication en champ proche (4) et qui comprend un étage d'interface de données filaire de contrôleur NFC (26) avec un premier décodeur (7), construit pour communiquer via les N lignes d'informations (5) avec l'étage d'interface de données filaire hôte (22) sur la base du premier protocole d'interface, et avec un deuxième décodeur (8), construit pour communiquer via les N lignes d'informations (5) avec un autre étage d'interface de données filaire hôte d'un autre processeur hôte sur la base d'un deuxième protocole d'interface ;
un étage de sélection de protocole (28) de l'étage d'interface de données filaire de contrôleur NFC (26), qui est construit pour sélectionner le premier décodeur (7) ou le deuxième décodeur (8) pour décoder les données reçues via les N lignes d'informations (5) selon le premier protocole d'interface sélectionné ou le deuxième protocole d'interface sélectionné,
**caractérisé en ce que**
l'étage de sélection de protocole (28) est construit pour analyser des signaux sur au moins l'une des N lignes d'informations (5) sur la base d'un schéma de connexion de ligne d'informations fixe pour chacun du premier protocole d'interface et du deuxième protocole d'interface pendant une procédure d'initialisation après une mise sous tension du contrôleur NFC (25) pour sélectionner soit le premier décodeur (7) soit le deuxième décodeur (8) à utiliser pour décoder les données reçues via les N lignes d'informations (5) selon le premier protocole d'interface sélectionné ou le deuxième protocole d'interface.

2. Dispositif (19) selon la revendication 1, dans lequel l'étage de sélection de protocole (28) est construit pour analyser un nombre de N = 3 ou N = 4 lignes d'informations (5) avec une première ligne d'informations (29) utilisée pour transmettre un signal d'horloge et une deuxième ligne d'informations (30) et une troisième ligne d'informations (31) et/ou une quatrième ligne d'informations (32) pour transmettre et/ou recevoir des données et/ou des informations d'adresse et/ou d'autres signaux en fonction de signaux censés être reçus, si le premier protocole d'interface ou le seconde protocole d'interface est utilisé par l'étage d'interface de données filaire hôte (22).

3. Dispositif (19) selon la revendication 2, dans lequel l'étage de sélection de protocole (28) est construit pour détecter le changement de logique "1" au potentiel de terre en tant que logique "0" sur la seconde ligne d'informations (30) utilisée pour transmettre un signal de sélection de puce et seulement après cela pour détecter le début du signal d'horloge sur la première ligne d'informations (29), et dans lequel l'étage de sélection de protocole (28), dans le cas de ces deux détections, est construit pour décider qu'une interface périphérique série (SPI) est utilisée par l'étage d'interface de données filaire hôte (22) et pour sélectionner un décodeur SPI en tant que premier décodeur (8) pour décoder les données reçues via les lignes d'informations (5).

4. Dispositif (19) selon la revendication 2 ou 3, dans lequel l'étage de sélection de protocole (28) est construit pour observer, pendant une période de détection, si le signal d'horloge est détecté sur la première ligne d'informations (29) alors qu'il se trouve sur la seconde ligne d'informations (30), et la troisième ligne d'informations (31) connectées à des broches d'adresse supplémentaires du contrôleur NFC (25) et utilisées comme lignes de changement d'adresse, qu'aucun changement des signaux n'est détecté pour décider qu'un bus de données de circuit inter-intégré (I2C) est utilisé en tant que le deuxième protocole d'interface par l'étage d'interface de données filaire hôte (22) et pour sélectionner un décodeur I2C en tant que le deuxième décodeur (8) pour décoder les données reçues sur la quatrième ligne d'informations (32).

5. Dispositif (19) selon la revendication 4, dans lequel l'étage de sélection de protocole (28) est construit pour décider qu'un émetteur-récepteur asynchrone universel (UART) est utilisé en tant qu'un troisième protocole d'interface par l'étage d'interface de données filaire hôte (22), si aucun du premier protocole d'interface ou du deuxième protocole d'interface n'a été sélectionné pendant une période de sélection et pour sélectionner un décodeur UART en tant qu'un troisième décodeur (9) pour décoder les données reçues via les lignes d'informations (5).

6. Dispositif (19) selon l'une quelconque des revendications 2 à 5, dans lequel l'interface de données filaire de contrôleur NFC (26) comprend un codeur pour coder des données à transmettre au processeur hôte (21) sur la base du protocole d'interface sélectionné.

7. Dispositif (19) selon l'une quelconque des revendications, dans lequel l'interface de données filaire de contrôleur NFC (26) observe une sortie de détection de trame ou de détection d'erreur du décodeur sélectionné (7, 8, 9) pour décider si le processus de détection et de sélection doit être redémarré.

8. Dispositif (19) selon l'une quelconque des revendications, dans lequel l'étage de sélection de protocole (28), après une mise sous tension, configure toutes les broches de ligne d'informations du circuit intégré de contrôleur NFC (25) en tant que broches d'entrée pour détecter une erreur potentielle dans la mise en oeuvre du schéma de connexion de ligne d'information.

9. Jeu de puces pour un dispositif (19) qui traite une application de type à communication en champ proche, **caractérisé en ce que** le jeu de puces comprend un processeur hôte (21) et un contrôleur NFC (25) du dispositif (19) selon les revendications 1 à 8.

10. Procédé de traitement d'une application de type à communication en champ proche avec un dispositif (19) selon l'une des revendications 1 à 8 qui comprend un processeur hôte (21) qui traite des applications de dispositif, qui utilisent l'application de type à communication en champ proche, et un contrôleur NFC (25), qui traite une interface sans contact de type à communication en champ proche (4), dans lequel les étapes suivantes sont traitées dans le contrôleur NFC (25) :
• traiter une procédure de mise sous tension dans le processeur hôte (21) et dans le contrôleur NFC (25) après une mise sous tension de ces circuits intégrés ;
• dans lequel le contrôleur NFC (25), après une période d'attente pour s'assurer que le processeur hôte (21) ait finalisé sa procédure de mise sous tension, analyse les signaux reçus sur au moins l'une de N lignes d'informations (5) d'une interface de données filaire matérielle entre le processeur hôte (21) et le contrôleur NFC (25) sur la base d'un schéma de connexion de ligne d'informations fixe (5) pour chacun d'un premier protocole d'interface et d'un second protocole d'interface de l'interface de données filaire matérielle qui est utilisé par le processeur hôte (21) pour sélectionner soit un premier décodeur (7) et un premier protocole d'interface, soit un deuxième décodeur (8) et un deuxième protocole d'interface du contrôleur NFC (25) à utiliser pour décoder les données reçues via les N lignes d'informations (5) selon le premier protocole d'interface sélectionné ou le second protocole d'interface sélectionné.
